# EUROPEAN PATENT APPLICATION

(11) **EP 1 932 430 A1**
(43) Date of publication of application: **18.06.2008**
(21) Application number: 07115651.7
(22) Date of filing: 04.09.2007
(51) Int. Cl.: A23C 19/082

(54) **Texture and shape control process for acidified food products**

(30) Priority: 14.12.2006 US 638985
(71) Applicant: KRAFT FOODS HOLDINGS, INC., Northfield, Illinois 60093 (US)
(72) Inventor: Jayaratnam, Suma, Hoffman Estates, IL 60192 (US); Trecker, Gary, McHenry, IL 60051 (US); Irvin, Scot, Vernon Hills, IL 60061 (US); Howard, Walter, Libertyville, IL 60048 (US)
(74) Representative: Smaggasgale, Gillian Helen

(57) **Abstract**

An acidified food composition includes a cheese component, a condensed phosphate emulsifying system, and one or more additional additives that are different than the condensed phosphate emulsifying system. A method for forming the acidified food compositions is also provided.

## Description

### BACKGROUND OF THE INVENTION

### 1. Field of the Invention

The present invention relates to acidified food products with natural texture and shape control, and specifically to cream cheese products with improved shape retention properties.

### 2. Background Art

Cream cheese is a soft, mild acid-coagulated uncured cheese made from a mixture of cream and milk. Uses of cream cheese are well known and include cheesecake, spreads, salads, and dips. Cream cheese characteristically has a smooth, butter-like texture at temperatures around normal room temperatures. In order to delay spoiling, cream cheese is usually refrigerated. The texture and body of cream cheese at refrigeration temperatures is such that the cream cheese can be sliced and spread.

Cream cheese is typically made by blending sweet whole milk and/or skim milk and sweet cream in pre-determined proportions to form a cream cheese mix. The cream cheese mix normally has a butterfat content from about 10 weight percent to about 14 weight percent. After culturing and separation, the finished cream cheese typically has a butterfat content of from about 33 percent to about 35 percent. Reduced fat or "light" cream cheese products can be produced from proportionately lower-fat cream cheese mixes, although such "light" cream cheese products generally have excellent flavor and texture, they still retain a relatively high butterfat content.

Although the prior art cream cheese compositions are well established, alternative compositions with improved storage characteristics are desirable. Cream cheese compositions that are stored in containers such that the need for refrigeration is reduced or eliminated are particularly useful. Improvements for improving the shelf-life of cream cheese are usually equally applicable to other cheese and acidified food compositions.

Accordingly, there exists a need for improved cheese compositions and, in particular, improved cream cheese compositions with improved storage characteristics.

### SUMMARY OF THE INVENTION

The present invention solves one or more problems of the prior art by providing in one embodiment an acidified food composition. The acidified food composition of this embodiment comprises a cheese component. The acidified food composition further includes a condensed phosphate emulsifying system, and one or more additional additives that are different than the condensed phosphate emulsifying system both dispersed within the cheese component. Advantageously, the acidified food composition is useful for cheese spread applications that are storable in a pressurized can with acceptable texture and viscosity. The compositions of various variations of the invention are also useful in cheese filling applications for a stuffed bagel that will not disappear into the dough throughout the processing of the product (Baking - > Freezing) and subsequent thawing and/or reheating by the end user. Moreover, the acidified food compositions are found to have improved shelf-life without the need for refrigeration.

In yet another embodiment of the present invention, a method of making the acidified food composition set forth above is provided. The method of this embodiment includes a step in which a cheese component, a condensed phosphate emulsifying system, and one or more additional additives are combined to form a precursor composition. The precursor composition is mixed and then heated to form the acidified food composition.

### BRIEF DESCRIPTION OF THE DRAWINGS

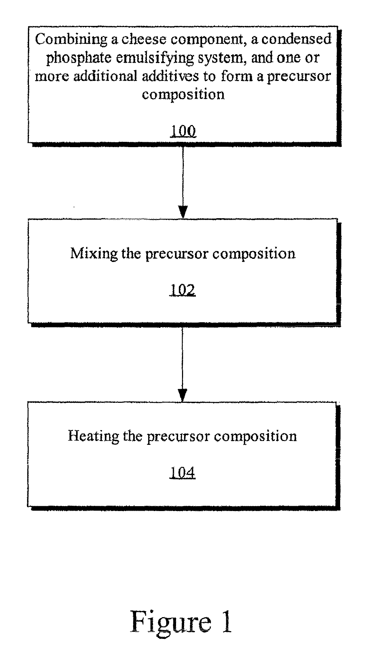

FIGURE 1 is a flowchart illustrating a method of forming an embodiment of the acidified food composition of the present invention.

### DETAILED DESCRIPTION OF THE PREFERRED EMBODIMENT(S)

Reference will now be made in detail to presently preferred compositions, embodiments and methods of the present invention, which constitute the best modes of practicing the invention presently known to the inventors. The Figures are not necessarily to scale. However, it is to be understood that the disclosed embodiments are merely exemplary of the invention that may be embodied in various and alternative forms. Therefore, specific details disclosed herein are not to be interpreted as limiting, but merely as a representative basis for any aspect of the invention and/or as a representative basis for teaching one skilled in the art to variously employ the present invention.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the term "polymer" includes "oligomer," "copolymer," "terpolymer," and the like; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies mutatis mutandis to normal grammatical variations of the initially defined abbreviation; and, unless expressly stated to the contrary, measurement of a property is determined by the same technique as previously or later referenced for the same property.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

It must also be noted that, as used in the specification and the appended claims, the singular form "a", "an", and "the" comprise plural referents unless the context clearly indicates otherwise. For example, reference to a component in the singular is intended to comprise a plurality of components.

Throughout this application, where publications are referenced, the disclosures of these publications in their entireties are hereby incorporated by reference into this application to more fully describe the state of the art to which this invention pertains.

The term "natural cheese" as used herein means a food product made by adding a microorganism to milk which is capable of metabolizing lactose to produce lactic acid thereby developing acidity. In some natural cheese variations, the milk is set with a milk clotting enzyme, such as rennet, or by developing acidity to the isoelectric point of the protein. When the set milk is cut, whey separates and is recovered from the resulting curd. The curd may be pressed to provide a cheese block in which curing generally takes place over a period of time under controlled conditions.

The term "analog cheese" as used herein means a product having flavor and body characteristics of natural cheese made by replacing at least a portion of the animal fat of the milk with vegetable fat and/or by replacing at least a portion of the casein of the milk with a vegetable protein.

In an embodiment of the present invention, an acidified food composition is provided. The acidified food composition comprises a cheese component. The acidified food composition further includes a condensed phosphate emulsifying system, and one or more additional additives that are different than the condensed phosphate emulsifying system both dispersed within the cheese component.

Suitable cheese compositions include, but are not limited to, natural cheeses, analog cheeses and combinations thereof. The selection of the cheese component in the acidified food compositions is useful for determining the overall food characteristic of the composition. For example, if a desired acidified product is a cream cheese, the cheese component includes a cream cheese, a cream cheese analog, or combinations thereof. Other examples of useful natural cheeses include soft natural cheeses and hard natural cheeses. Suitable examples of soft natural cheeses include, but are not limited to, cottage cheese, cream cheese, ricotta cheese, and Neuchâtel cheese. Suitable examples of hard cheese include, but are not limited to parmesan cheese and cheddar cheese. The present embodiment is particularly useful when the cheese component includes a cream cheese or an anolog cream cheese.

The food composition of the present invention is a characteristically acidified selection of appropriate additives and a condensed phosphate emulsifier system. In a variation of the present embodiment, the one or more additional additives and condensed phosphate emulsifier system are present in a sufficient amount that the pH of the acidified food composition is less than or equal to 4.8. In another variation of the present embodiment, the one or more additional additives and condensed phosphate emulsifier system are present in a sufficient amount that the pH of the acidified food composition is less than or equal to 4.7. In yet another variation of the present embodiment, the one or more additional additives and condensed phosphate emulsifier system are present in a sufficient amount that the pH of the acidified food composition is less than or equal to 4.5. In yet another variation of the present embodiment, the one or more additional additives and condensed phosphate emulsifier system are present in a sufficient amount that the pH of the acidified food composition is less than or equal to 4.3. In other variations of the present embodiment, the one or more additional additives and condensed phosphate emulsifier system are present in a sufficient amount that the pH of the acidified food composition is greater than or equal to 3.8. In still other variations of the invention, the one or more additional additives and condensed phosphate emulsifier system are present in a sufficient amount that the pH of the acidified food composition is greater than or equal to 4 0. In one refinement of the present invention, the one or more additional additives and condensed phosphate emulsifier system are present in a sufficient amount that the pH of the acidified food composition is from 3.8 to 4.8. In another refinement of the present invention, the one or more additional additives and condensed phosphate emulsifier system are present in a sufficient amount that the pH of the acidified food composition is from 4.0 to 4.5.

As set forth above, the acidified food composition of the present invention includes a condensed phosphate. A suitable condensed phosphate emulsifying system includes a component selected from the group consisting of sodium acid pyrophosphate, sodium hexametaphosphate, and combinations thereof. In one variation of the present embodiment, the condensed phosphate is present in an amount from about 0.1 wt % to 2.0 wt% . In another variation of the present embodiment, the condensed phosphate is present in an amount from about 0.1 wt % to 1.0 wt%. In still another variation of the present embodiment, the condensed phosphate is present in an amount from about 0.1 wt % to 2.0 wt%. In another variation of the present embodiment, the condensed phosphate is present in an amount from about 0.1 wt % to 1.0 wt% . In yet another variation of the present embodiment, the condensed phosphate is present in an amount from about 0.2 wt % to 0.5 wt% .

The acidified food composition of the present embodiment includes one or more additional components. Suitable examples of such additives include, but are not limited to, milk products, water, acidulants, emulsifiers, melting salts, preservatives, sodium chloride, colorings, flavorants, and combinations thereof. Specific examples of acidulants include, but are not limited to, lactic acid, citric acid, malic acid, hydrochloric acid, sodium acid sulfate, and combinations thereof. Specific examples of milk products include, but are not limited to, butter, heavy cream, cream, anhydrous milk fat, concentrated milk fat, or alternative oils such as palm oil, canola oil, soybean oil, and combinations thereof. Moreover, in some variations, the milk products are dry powder. Examples of such dry powders are milk protein concentrates, whey protein concentrates, concentrated whey, and the like. Specific examples of useful melting salts include, but are not limited to, phosphate salts, citrate salts, and combinations thereof. Other useful additives include corn syrup solids and starch.

In a variation of the present embodiment, the milk product additives are present in an amount greater than 30 % of the total weight of the acidified food composition. In refinement of the present embodiment, the acidulants are present in an amount from about 0.1 % to 2.0% of the total weight of the acidified food composition. In another refinement of the present invention, the acidulant(s) is present in an amount from 0. 3 % to 1.3 % of the total weight of the acidified food composition. In another refinement of the present embodiment, the emulsifier is present in an amount from 0.05 % to a 3 % of the total weight of the acidified food composition. In still another refinement of the present embodiment, the milk product additives are present in an amount from 0.0 % to a 12 % of the total weight of the acidified food composition. In yet another refinement of the present invention, the acidified food composition is from 0 to 35%. In another refinement of the present embodiment, the emulsifier is present in an amount from 0.05 % to a 3 % of the total weight of the acidified food composition. In yet another refinement of the present embodiment, water is present in an amount from 40% to 70% of the total weight of the acidified food composition.

The acidified compositions of the present embodiment are advantageously used in a number of varying food products. In one variation, the acidified food composition has a sufficient viscosity to maintain its shape integrity. In particular, the acidified food compositions have a sufficient viscosity to maintain their shape integrity at temperatures from about 45° F to about 95° F. Acidified food products with such viscosity characteristics can be stored in pressurized cans and dispensed when desired. Such pressurized can applications are particularly useful when the acidified food composition is a cream cheese application. In another variation of the embodiment, the food compositions of the present invention have sufficient viscosity to maintain their shape integrity at temperatures from about 200° F to 400° F. In a refinement of the present invention, a sufficient viscosity to maintain shape integrity is from 20,000 centipoise to about 100,000 centipoise over the temperature range where shape integrity is desired (e.g., 45° F to about 95° F and 200° F to 400° F) .

In a variation of the present embodiment, the acidified food composition is useful for cheese spread applications that are storable in an aersol can with acceptable texture and viscosity. Particularly useful cheese spread applications include, but are not limited to, cream cheese spreads. In a refinement of this variation, the cheese spread possesses acceptable texture and viscosity while being stored without refrigeration at temperatures up to 95° F. In another refinement of this variation, the cheese spread possesses acceptable texture and viscosity while being stored without refrigeration at temperatures up to 80° F. In still another refinement of this variation, the cheese spread possesses acceptable texture and viscosity while being stored without refrigeration at temperatures from 45 to 95° F. In another variation of the present embodiment, the acidified food compositions are useful in cheese filling applications such as cream cheese stuffed bagels. In this variation, it is desirable that the cream cheese does not disappear into the dough throughout the processing of the product (Baking - > Freezing) and subsequent thawing and/or reheating by the end user. In a refinement of this variation, the acidifed food composition possesses acceptable texture and viscosity while being stored without refrigeration at temperatures from 200° F to 400° F.

In another embodiment of the present invention, an acidified food composition is provided. The composition of this embodiment includes a cheese component, a condensed phosphate emulsifying system dispersed within the cheese component; and one or more additional additives that are different than the condensed phosphate emulsifying system dispersed within the cheese component. Characteristically, the condensed phosphate emulsifying system and the one or more additional additives are present in a sufficient amount that the pH of the acidified food composition is less than or equal to the isoelectric point of a protein present in the cheese component. Although an isoelectric point of any protein that is present in the acidified food product can be used in this determination, cassein is particularly useful because of the presence of this protein in many cheese products. The characteristics, ranges, and choices for the cheese component, condensed phosphate emulsifying system, and the one or more additional additives is the same as those set forth above.

In another embodiment of the present invention, an acidified food composition is provided. The acidified food composition of this embodiment includes a cheese component, water, an emulsifying system dispersed within the cheese component, a milkfat component, and one or more additives that are different than the condensed phosphate emulsifying system. As set forth above, the emulsifying system comprise a component selected from the group consisting of sodium acid pyrophosphate, sodium hexametaphosphate, and combinations thereof. Examples of useful milkfat components include, but are not limited to, cream, milk, and combinations thereof. In a variation of the present embodiment, the milkfat component is present in an amount greater than 30 % of the total weight of the cream acidified food composition. The characteristics, ranges, and choices for the cheese component, condensed phosphate emulsifying system, and the one or more additional additives is the same as those set forth above.

In yet another embodiment of the present invention, a method of making the acidified food compositions set forth above is provided. With reference to Figure 1, a flow chart depicting the method of this embodiment is provided. In step 100, a cheese component, a condensed phosphate emulsifying system, and one or more additional additives are combined to form a precursor composition. The precursor composition is mixed in step 102. Next, the precursor composition is heated at a sufficient temperature and pressure to form the acidified food composition (step 103). In a variation of the invention, the temperature is 120° F to 250° F. In another variation of the invention, the temperature is 150° F to 190° F. In still another variation, the pressure is 30 to 60 psi. The condensed phosphate emulsifying system and the one or more additional additives are present in a sufficient amount (as set forth above) that the pH of the acidified food composition is less than or equal to 4.8. The characteristics, ranges, and choices for the cheese component, condensed phosphate emulsifying system, and the one or more additional additives is the same as those set forth above.

With reference to Table 1, compositions for cream cheese consistent with the present invention are provided. In a variation of the present embodiment, the cream cheeses provided had viscosities from 20,000 centipoise to 100,000 centipoise at temperatures of 50° F to 180° F. Moreover, the cream cheese compositions are dispensable from a pressurized can.

**Table 1. Cream Cheese Composition**

| **Description** | **% weight** |
|---|---|
| Regular cream cheese | 61.76 |
| Cheezkake blend | 15.44 |
| Buttermilk sweet cream | 1.85 |
| Natural flavor LNDT-19 | 0.15 |
| Carob Bean gum | 0.40 |
| Sucralose | 0.00 |
| Tricalcium phosphate | 0.80 |
| Saodium Acid Pyrophosphate | 0.25 |
| Anhydrous milk fat | 10.00 |
| Water | 9.28 |
| Potassium sorbate | 0.07 |
| **Total** | **100.00** |

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. An acidified composition comprising:
a cheese component selected from the group consisting of natural cheeses, analog cheeses and combinations thereof;
a condensed phosphate emulsifying system dispersed within the cheese component; and
one or more additional additives that are different than the condensed phosphate emulsifying system, the condensed phosphate emulsifying system and the one or more additional additives in a sufficient amount that the pH of the acidified food composition is less than or equal to 4.8.

2. The acidified food composition of claim 1 wherein the pH of the acidified food composition is less than or equal to 4.7.

3. The acidified food composition of claim 1 wherein the pH of the acidified food composition is less than or equal to 4.3.

4. The acidified food composition of claim 1 wherein the pH of the acidified food composition is from 4.0 to 4.5.

5. The acidified food composition of any one of Claims 1 to 4 wherein the one or more additional components are selected from the group consisting of milk products, water, acidulants, emulsifiers, melting salts, preservatives, sodium chloride, colorings, flavorants, and combinations thereof; the milk products comprise a component selected from the group consisting of butter, heavy cream, cream, anhydrous milk fat, concentrated milk fat, or alternative oils such as palm oil, canola oil soybean oil, and combinations thereof; the melting salts comprise a component selected from the group consisting of phosphate salts, citrate salts, and combinations thereof; and the acidulants comprise a component selected from the group consisting of lactic acid, citric acid, malic acid, hydrochloric acid, sodium acid sulfate, and combinations thereof.

6. The acidified food composition of any one of Claims 1 to 5 having a sufficient viscosity to maintain shape identity in the temperature range 45° F to 95° F.

7. The acidified food composition of any one of Claims 1 to 5 having a sufficient viscosity to maintain shape identity in the temperature range 250°F to 400°F.

8. An acidified food composition comprising:
a cheese component;
a condensed phosphate emulsifying system dispersed within the cheese component; and
one or more additional additives that are different than the condensed phosphate emulsifying system, the condensed phosphate emulsifying system and the one or more additional additives in a sufficient amount that the pH of the acidified food composition is less than or equal to the isoelectric point of a protein present in the cheese component.

9. The acidified food composition of Claim 8 wherein the protein is cassein.

10. The acidified food composition of Claim 8 or 9 wherein the pH of the acidified food composition is less than or equal to 4.8.

11. The acidified food composition of Claim 8 or 9 wherein the condensed phosphate is present in an amount from about 0. wt% to 1.0 wt %.

12. The acidified food composition of any one of Claims 8 to 11 wherein the one or more additional components are selected from the group consisting of milk products, water, acidulants, emulsifiers, melting salts, preservatives, sodium chloride, colorings, flavorants, and combinations thereof.

13. The acidified food composition of any one of Claims 8 to 12 wherein the milk products comprise a component selected from the group consisting of butter, heavy cream, cream, anhydrous milk fat, concentrated milk fat, or alternative oils such as palm oil, canola oil soy bean oil, and combinations thereof; the melting salts comprise a component selected from the group consisting of phosphate salts, citrate salts, and combinations thereof; and the acidulants comprise a component selected from the group consisting of lactic acid, citric acid, malic acid, hydrochloric acid, sodium acid sulphate, and combinations thereof.

14. The acidified food composition of any one of Claims 1 to 13 wherein the pH of the acidified food composition is from 3.8 to 4.8.

15. The acidified food composition of any one of Claims 1 to 13 wherein the condensed phosphate is present in an amount from about 0.2 wt % to 0.5 wt %.

16. The acidified food composition of any one of Claims 1 to 15 wherein the condensed phosphate emulsifying system comprises a component selected from the group consisting of sodium acid pyrophosphate, sodium hexametaphosphate, and combinations thereof.

17. An acidified food composition comprising:
a cheese component;
an emulsifying system dispersed within the cheese component, the emulsifying system comprising a component selected from the group consisting of sodium acid pyrophosphate, sodium hexametaphosphate, and combinations thereof; and
one or more additional additives that are different than the condensed phosphate emulsifying system, the condensed phosphate emulsifying system and the one or more additional additives in a sufficient amount that the pH of the acidified food composition is less than or equal to 4.8.

18. An acidified food composition comprising:
a cheese component;
an emulsifying system dispersed within the cheese component, the emulsifying system comprising a component selected from the group consisting of sodium acid pyrophosphate, sodium hexametaphosphate, and combinations thereof;
a milkfat component selected from the group consisting of cream, milk, or combinations thereof, the milkfat component being present in an amount greater than 30% of the total weight of the cream acidified food composition;
water; and
one or more additional additives that are different than the condensed phosphate emulsifying system, the condensed phosphate emulsifying system and the one or more additional additives in a sufficient amount that the pH of the acidified food composition is less than or equal to 4.8.

19. A method of making an acidified food composition, the method comprising:
a) combining a cheese component, a condensed phosphate emulsifying system, and one or more additional additives to form a precursor composition;
b) mixing the precursor composition; and
c) heating the precursor composition at a sufficient temperature and pressure to form the acidified food composition wherein the condensed phosphate emulsifying system and the one or more additional additives are present in a sufficient amount that the pH of the acidified food composition is less than or equal to 4.8.

20. The method of Claim 19 wherein the condensed phosphate is present in an amount from about 0.1 wt % to 1.0 wt %.

21. The method of Claim 19 or 20 wherein the condensed phosphate emulsifying system comprises a component selected from the group consisting of sodium acid pyrophosphate, sodium hexametaphosphate, and combinations thereof.
